# EUROPEAN PATENT SPECIFICATION

(11) **EP 2 514 940 B1**
(45) Date of publication and mention of the grant of the patent: **16.12.2015**
(21) Application number: 12163930.6
(22) Date of filing: 12.04.2012
(51) Int. Cl.: F01N 13/18, F01N 1/00, B60K 13/04

(54) **Suspension system for silencing device pertaining to a vehicle**
Aufhängungssystem für eine Geräuschdämpfungsvorrichtung eines Fahrzeugs
Système de suspension pour dispositif de silençage appartenant à un véhicule

(30) Priority: 20.04.2011 SE 1150349
(43) Date of publication of application: 24.10.2012
(73) Proprietor: Scania CV AB, 151 87 Södertälje (SE)
(72) Inventor: Norbäck, Joakim, SE-635 09 ESKILSTUNA (SE)
(74) Representative: Scania CV AB

(56) References cited:
- WO-A1-03/100227
- CH-A5- 608 179
- DE-A1- 3 904 912
- US-A1- 2010 031 644

## Description

### Field of the invention

The present invention relates to a suspension system for a silencing device pertaining to a vehicle, and a vehicle provided with such a suspension system, according to the preambles of the independent claims.

### Background to the invention

In a vehicle, a silencing device is closely associated with the exhaust pipe in order to damp the sounds from the engine. Such a silencing device may for example also comprise a particle filter for exhaust post-treatment. At present, the silencing device is usually fitted on a vehicle without any requirement for it to be easy to remove subsequently.

However, the particle filter in the silencing device may need to be replaced, which entails also having to remove the silencing device, which may be particularly difficult to do in that the silencing device may weigh between 100 and 150 kg. The silencing device on a bus may be fastened on the side of the vehicle's rear end. There are also stringent requirements for damping of vibrations in order to provide bus passengers with high levels of comfort.

Document Us 2010/0031644 describes an exhaust system having a mounting assembly including a platform and a base frame. The emission control system may be secured to the platform. The mounting assembly may be configured to position the emissions control system substantially adjacent to a power source. The platform may movable relative to the base frame between first position and a second position.

The invention has identified a problem with today's suspension systems, inter alia with regard to the difficulty of removing the silencing device.

The object of the present invention is therefore to propose a suspension system for a silencing device which provides assurance of the latter being easy to fit/remove and that these operations can be performed safely. The vibration damping requirements are also to be met.

### Summary of the invention

The above objects are achieved with the invention defined by the independent claims.

Preferred embodiments are defined by the dependent claims.

In a first aspect, the invention relates to a suspension system for a silencing device pertaining to a vehicle. The system comprises at least two fitting elements closely associated with the underside of the silencing device, and at least two sliderails which each have a first end and a second end and are intended to be closely associated with the underside of the silencing device. The system also comprises at least two support rails which each have a first end and a second end and are intended to be firmly attached to the vehicle. The silencing device is firmly attached to the sliderails via at least two damping units which are intended to be fitted in said fitting elements. The sliderails are also intended to be closely associated with, and be movable relative to, the support rails, making it possible for the silencing device to be drawn out, characterised in that the silencing device is firmly attached to the sliderails via at least two damping units which are intended to be fitted in said fitting elements, and that each sliderail has at least two rollers which are situated at its first end and abut against the longitudinal sides of the support rail when the sliderail is movable relative to the support rail, and are accommodated in recesses in the support rail when the silencing device is fitted in the vehicle, i.e. when the sliderail is fully inserted in the support rail.

The suspension system is intended to make it possible for the silencing device to be exposed, e.g. for servicing operations. The system is also efficient in terms of space and is easy to fit and remove. Fitting/removal can also be effected safely.

In a second aspect, the invention relates to a vehicle provided with a suspension system.

### Brief description of drawings

- Figure 1: is a perspective view of a suspension system for a silencing device pertaining to a vehicle, with the silencing device in a drawn-out state,
- Figure 2: is a perspective view of a sliderail and a support rail which form part of the suspension system,
- Figure 3: is a perspective view of a suspension system for a silencing device pertaining to a vehicle, with the silencing device in an inserted fitted state,
- Figure 4: is a side view of a sliderail and a support rail which form part of the suspension system, in a drawn-out state, together with the silencing device and the support rack,
- Figure 5: is a side view of a sliderail and a support rail which form part of the suspension system, in a drawn-out state, and
- Figure 6: is a perspective view of a damping unit.

### Detailed description of preferred embodiments of the invention

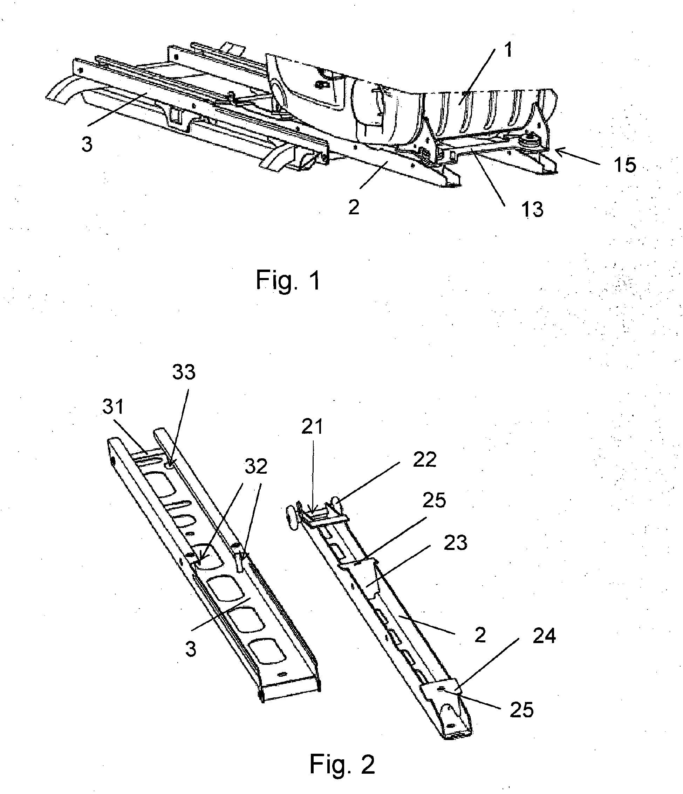

Figure 1 is a perspective view of a suspension system for a silencing device 1 pertaining to a vehicle. The suspension system comprises at least two fitting elements 13 closely associated with the underside of the silencing device. In each fitting element there are at least two fitting apertures 15. The suspension system also comprises at least two sliderails 2 and at least two support rails 3. The sliderails 2 are intended to be attached firmly to the underside of the silencing device via damping units 4 fitted in the apertures 15 in the fitting elements. The sliderails 2 are also intended to be closely associated with, and be movable relative to, the support rails 3, thereby also making it possible for the silencing device to be movable and therefore be drawn out from the position in which it is fitted in the vehicle. The support rails 3 are intended to be parallel and horizontal and be firmly attached to the vehicle. The fact that the sliderails 2 are closely associated with the support rails 3 leads to the sliderails also being substantially parallel and horizontal and being closely associated with the support rails.

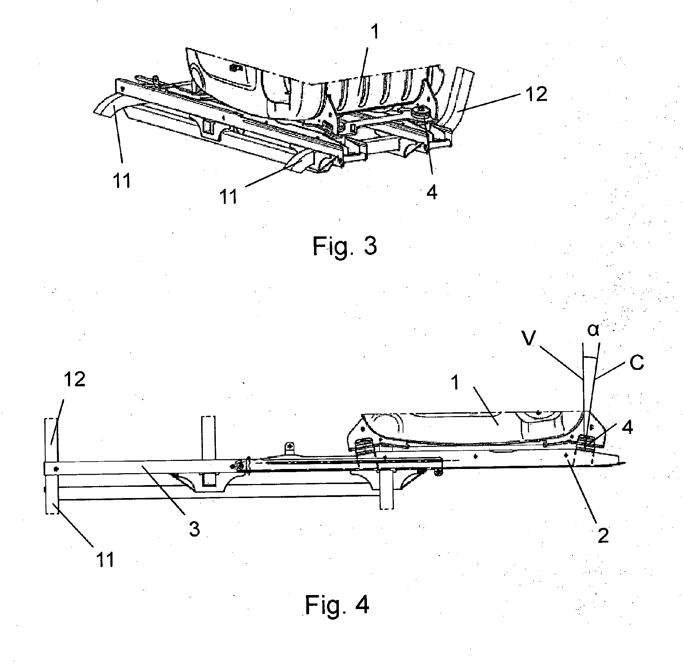

As may be seen in Figure 3, which is a perspective view of a suspension system when the silencing device is in an inserted fitted state, the support rails 3 are closely associated with a support rack 11, 12. The support rack is intended to be closely associated with the vehicle's chassis and/or bodywork. For example, the support rack's lower portion 11 may be fastened in the vehicle's chassis, and the support rack's upper portion 12 be fastened in the vehicle's bodywork. The support rack 11, 12 comprises members which are substantially at right angles relative to the sliderails 2 and the support rails 3.

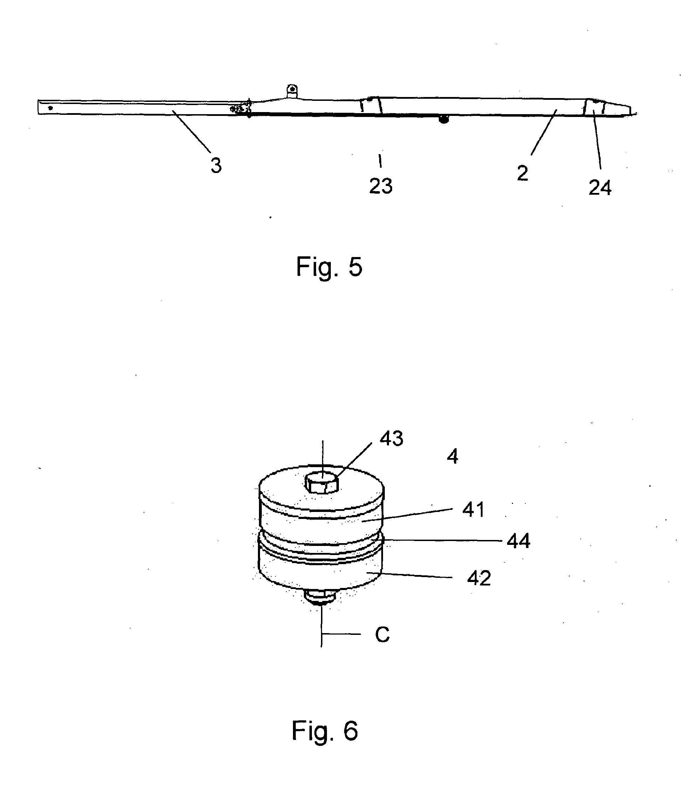

Figure 2 is a perspective view of a sliderail 2 and a support rail 3. The sliderail 2 is intended to be closely associated with the inside of the support rail 3. In this embodiment, both rails are substantially U-shaped. In an alternative embodiment the sliderail need not be U-shaped and might consist entirely of a flat rail which abuts against the inside of the support rail 3 (the middle of the U). Two fitting apertures 25 are closely associated with the sliderail 2. The damping units 4 are intended to be fitted in these fitting apertures. The fitting apertures 25 may be situated in first and second fitting supports 23, 24. These fitting supports are also visible in Figure 5, which is a side view of a sliderail and a support rail in a drawn-out state. Both the sliderail 2 and the support rail 3 are elongate elements which each have a first end and a second end.

In Figure 5, the sliderail 2 is drawn out about 550 mm relative to the support rail 3. The sliderail can be drawn out between 500 and 600 mm relative to the support rail.

The sliderail 2 comprises preferably at least two rollers 22 situated at its first end, as illustrated in Figure 2. The rollers may be connected together by a spindle 21. When the silencing device is fitted in the vehicle, i.e. when the sliderail 2 is fully inserted in the support rail 3, the rollers 22 are accommodated in respective recesses 33 (only one recess is visible in Figure 2) in the support rail 3. The inserted state is depicted in Figure 3. The sliderail 2 is firmly connected to the support rail 3 by a fastening device when the silencing device is fitted in the vehicle. The silencing device is thus fitted securely. The fastening device may for example comprise screws, nuts, rivets or the like.

As the sliderail 2 is movable relative to the support rail 3, i.e. when the sliderail is being pulled out or pushed in, the rollers abut against the longitudinal sides of the support rail 3 and help to make the silencer easy to remove/fit. The drawn-out state is for example visible in Figures 4 and 5.

When the sliderail 2 is fully drawn out, it is firmly connected to the support rail 3 by a fastening device. The silencing device is thus secured in a drawn-out state, making it possible to perform servicing operations. The fastening device may for example comprise screws, nuts, rivets or the like.

When the silencing device is being drawn out/pushed into the vehicle, the movement of the sliderail 2 relative to the support rail 3 is limited by a locking bar 31 situated at the first end of the support rail 3. The locking bar 31 comes then to abutment against the first end of the sliderail 2.

When the silencing device is drawn out, the movement of the sliderail 2 relative to the support rail 3 is limited by a locking device 32. The locking device comprises protruding flanges adjacent to the longitudinal sides of the support rail 3. The flanges are substantially at right angles to the inside of the support rail. When the silencing device is fully drawn out, the locking device 32 comes to abutment against the sliderail's rollers 22. Both the locking bar 31 and the locking device 32 are visible in Figure 2.

The positioning of the damping units 4 is illustrated by Figures 1, 3 and 4, but their configuration is most clearly depicted in the perspective view in Figure 6. The damping units each comprise upper and lower cylindrical damping pads 41, 42 and an intermediate element 44. The pads 41, 42 and the intermediate element 44 are connected together by a rod 43 intended to be aligned with a longitudinal centreline C.

Each damping unit's rod 43 is intended to be fitted in said fitting apertures 25 on the sliderails 2 and in the apertures 15 in the fitting elements 13. The fitting elements have flanges protruding at right angles. When the silencing device is firmly attached to the sliderail, the surfaces of the fitting elements 13 in which the apertures 15 are situated and the surfaces of the fitting supports 23, 24 in which the apertures 25 are situated will be parallel with one another. These surfaces are positioned somewhat obliquely so that perpendiculars to them will be at a certain angle relative to a vertical line. The perpendiculars to the surface of the fitting elements 13 and to the surfaces of the fitting supports 23, 24 are parallel with the longitudinal centreline C of the rod 43. The rod's longitudinal centreline C is at an angle α relative to a vertical reference line V. The angle α is about 10°.

The damping pads 41, 42 of the damping units 4 are homogeneous cylinders made of elastic material which may comprise metal wire, rubber or plastic or some other heat-tolerant material.

When the silencing device is to be drawn out, the fastening device situated in the sliderails and the support rails has to be unscrewed, making it possible for the silencing device to be drawn out together with the items fastened to it (sliderails and damping units). The silencing device is substantially square with side lengths of about 700 mm each. The total length of the rails is about 1200 mm. The locking device 32 is situated at a distance of between 500 and 600 mm, preferably 550 mm, from the first end of the support rail 3. This corresponds to the greatest distance which the silencing device can be drawn out. The silencing device will then not be totally outside the vehicle, since this is not necessary in order to perform servicing operations. As the weight of the silencing device amounts to between 100 and 150 kg, it is desirable not to pull the rails out too far but for them to overlap one another by about 500 mm in a drawn-out state.

With advantage, the rails of the suspension system for the silencing device are situated at a height of about 1 m, catering for a relatively good ergonomic posture for the person or persons performing servicing operations on, or fitting/removing, the silencing device.

In a preferred embodiment, the suspension system comprises four fitting apertures 15 in the fitting unit 13 closely associated with the underside of the silencing device, and four damping units 4 intended to be fitted in said fitting apertures 15 and 25.

Fitting the silencing device to the vehicle involves the damping units 4 being placed in the fitting apertures 15 in the fitting elements 13 and then being also placed in the fitting apertures 25 in the fitting supports 23, 24. The damping units have then to be firmly attached to the two fitting elements 13 (on the silencing device) and to the fitting supports 23, 24 (on the sliderail). The sliderails 2 then come to abutment against the support rails 3 so that the rails are fully inserted in one another and the rollers 22 on the sliderails 2 will be in the recesses 33 on the support rails 3. The sliderails 2 are then locked firmly to the support rails 3 by means of the fastening device so that the silencing device is securely fitted in the vehicle.

The present suspension system is not restricted to being used to suspend a silencing device, as it may also be used for suspension of an engine, gearbox or the like.

The present invention is not restricted to the preferred embodiments described above. Sundry alternatives, modifications and equivalents may be used. The above embodiments are therefore not to be regarded as limiting the invention's protective scope, which is defined by the attached claims.

## Claims

1. A suspension system for a silencing device (1) pertaining to a vehicle, which system comprises
- at least two fitting elements (13) closely associated with the underside of the silencing device,
- at least two sliderails (2) which each have a first end and a second end and are intended to be closely associated with the underside of the silencing device,
- at least two support rails (3) which each have a first end and a second end and are intended to be firmly attached to the vehicle,
- the sliderails (2) being intended to be closely associated with, and be movable relative to, the support rails (3), thereby making it possible for the silencing device to be drawn out,
**characterised in that** the silencing device (1) is firmly attached to the sliderails (2) via at least two damping units (4) which are intended to be fitted in said fitting elements (13), and that each sliderail (2) has at least two rollers (22) which are situated at its first end and abut against the longitudinal sides of the support rail (3) when the sliderail (2) is movable relative to the support rail (3), and are accommodated in recesses (33) in the support rail (3) when the silencing device (1) is fitted in the vehicle, i.e. when the sliderail (2) is fully inserted in the support rail (3).

2. A suspension system according to claim 1, **characterised in that** the support rails (3) are intended to be parallel and horizontal and be closely associated with a support rack (11, 12) and that the support rack is intended to be closely associated with the vehicle's chassis and/or bodywork.

3. A suspension system according to any one of the foregoing claims, **characterised by** two fitting apertures (25) which are closely associated with the sliderail (2) and in which the damping units (4) are intended to be fitted.

4. A suspension system according to claim 3, **characterised in that** the fitting apertures (25) are respectively situated in first and second fitting supports (23, 24) close to the sliderail (2).

5. A suspension system according to claim 2, **characterised in that** the support rack (11, 12) comprises members substantially at right angles relative to the rails (2, 3).

6. A suspension system according to claim 1, **characterised in that** the sliderail (2) can be drawn out between 500 and 600 mm relative to the support rail (3).

7. A suspension system according to any one of the foregoing claims, **characterised in that** the movement of the sliderail (2) relative to the support rail (3) when the silencing device (1) is being pushed in is limited by a locking bar (31) which is situated at the first end of the support rail (3) and which then comes to abutment against the first end of the sliderail (2).

8. A suspension system according to any one of the foregoing claims, **characterised in that** the movement of the sliderail (2) relative to the support rail (3) when the silencing device (1) is being extracted is limited by a locking device (32) which is adjacent to the longitudinal sides of the support rail (3) and which then comes to abutment against the rollers (22) of the sliderail (2).

9. A suspension system according to claim 1, **characterised in that** the damping units (4) each comprise an upper and a lower cylindrical damping pad (41, 42) and an intermediate element (44) connected together by a rod (43) which is intended to be aligned with a longitudinal centreline (C).

10. A suspension system according to claims 3 and 9, **characterised in that** the rod (43) of each damping unit (4) is intended to be fitted in said fitting apertures (25) on the sliderails (2) and in apertures (15) in the fitting elements (13).

11. A suspension system according to either of claims 1 and 10, **characterised in that** said fitting elements (13) have flanges protruding at right angles.

12. A vehicle **characterised in that** it is provided with a suspension system according to any one of claims 1 to 11.

## Patentansprüche

1. Aufhängungssystem für eine einem Fahrzeug zugehörige Geräuschdämpfungsvorrichtung (1), wobei das System umfasst
• wenigstens zwei Einsatzteile (13), welche nahe der Unterseite der Geräuschdämpfungsvorrichtung angebracht sind,
• wenigstens zwei Gleitschienen (2), welche jeweils ein erstes und ein zweites Ende aufweisen und dazu vorgesehen sind nahe an der Unterseite der Geräuschdämpfungsvorrichtung angebracht zu werden,
• wenigstens zwei Stützschienen (3), welche jeweils ein erstes und zweites Ende aufweisen und dazu vorgesehen sind, fest am Fahrzeug angebracht zu werden,
• wobei die Gleitschienen (2) dazu vorgesehen sind, an den Stützschienen (3) angeordnet und relativ zu diesen beweglich zu sein, um zu ermöglichen, dass die Geräuschdämpfungsvorrichtung herausziehbar ist,
**dadurch gekennzeichnet, dass** die Geräuschdämpfungsvorrichtung (1) fest mit den Gleitschienen (2) durch wenigstens zwei Dämpfungselemente (4) verbunden ist, die dazu vorgesehen sind in die Passelemente (13) eingesetzt zu werden, und dass jede Gleitschiene (2) wenigstens zwei Rollen (22) aufweist, welche an deren ersten Ende angebracht sind und an der Längsseite der Stützschienen (3) anliegen, wobei die Gleitschiene (2) relativ zur Stützschiene (3) beweglich ist, und in Ausnehmungen (33) in der Stützschiene (3) untergebracht sind, wenn die Geräuschdämpfungsvorrichtung (1) in das Fahrzeug eingesetzt ist, das heißt, wenn die Gleitschiene (2) vollständig in die Stützschiene (3) eingeschoben ist.

2. Aufhängungssystem nach Anspruch 1, **dadurch gekennzeichnet, dass** die Stützschienen (3) dazu vorgesehen sind, parallel und horizontal ausgerichtet zu werden, und an einem Stützgestell (11, 12) angebracht sind, und dass das Stützgestell dazu vorgesehen ist, nahe am Fahrgestell und/oder der Fahrzeugkarosse angebracht zu werden.

3. Aufhängungssystem nach einem der vorangehenden Ansprüche, **gekennzeichnet durch** zwei Passöffnungen (25), welche an der Gleitschiene (2) angebracht sind und in welche die Dämpfungselemente (4) passen.

4. Aufhängungssystem nach Anspruch 3, **dadurch gekennzeichnet, dass** die Passöffnungen (25) entsprechend an der ersten und zweiten Stütze (23, 24) an der Gleitschiene (2) angebracht sind.

5. Aufhängungssystem nach Anspruch 2, **dadurch gekennzeichnet, dass** das Stützgestell (11, 12) Bauteile aufweist, die im Wesentlichen im rechten Winkel relativ zu den Schienen (2, 3) angeordnet sind.

6. Aufhängungssystem nach Anspruch 1, **dadurch gekennzeichnet, dass** die Gleitschiene (2) um 500 bis 600mm bezüglich der Stützschiene (3) herausgezogen werden kann.

7. Aufhängungssystem nach einem der vorangehenden Ansprüche, **dadurch gekennzeichnet, dass** die Bewegung der Gleitschiene (2) gegenüber der Stützschiene (3) dann, wenn die Geräuschdämpfungsvorrichtung (1) hineingeschoben wird, durch eine Anschlagstange (31) begrenzt ist, welche am ersten Ende der Stützschiene (3) angebracht ist und dann in Berührung mit dem ersten Ende der Gleitschiene (2) kommt.

8. Aufhängungssystem nach einem der vorangehenden Ansprüche, **dadurch gekennzeichnet, dass** die Bewegung der Gleitschiene (2) gegenüber der Stützschiene (3) dann, wenn sie herausgezogen wird, durch eine Sperrvorrichtung (32) begrenzt ist, welche benachbart zu den Längsseiten der Stützschiene (3) angeordnet ist und in Berührung mit den Rollen (22) der Gleitschiene (2) kommt.

9. Aufhängungssystem nach Anspruch 1, **dadurch gekennzeichnet, dass** die Dämpfungselemente (4) jeweils ein oberes und unteres Dämpfungskissen (41, 42) sowie ein Zwischenelement (44) aufweisen, die durch einen Stab (43) miteinander verbunden sind, der dazu vorgesehen ist, zu einer Längsachse (C) zentriert zu werden.

10. Aufhängungssystem nach Anspruch 3 und 9, **dadurch gekennzeichnet, dass** der Stab (43) eines jeden Dämpfungselements (4) so beschaffen ist, dass er in die Passöffnungen (25) der Gleitschienen (2) und in die Öffnungen (15) der Einsatzteile (13) passt.

11. Aufhängungssystem nach einem der Ansprüche 1 und 10, **dadurch gekennzeichnet, dass** die Einsatzteile (13) Flansche aufweisen, die im rechten Winkel vorstehen.

12. Fahrzeug, **dadurch gekennzeichnet, dass** es ein Aufhängungssystem nach einem der Ansprüche 1 bis 11 aufweist.

## Revendications

1. Système de suspension pour un dispositif de silencieux (1) appartenant à un véhicule, ce système comprenant :
- au moins deux éléments d'adaptation (13) étroitement associés au côté inférieur du dispositif de silencieux,
- au moins deux rails de coulissement (2), qui comportent chacun une première extrémité et une deuxième extrémité, et qui sont conçus de façon à être étroitement associés au côté inférieur du dispositif de silencieux,
- au moins deux rails de support (3), qui comportent chacun une première extrémité et une deuxième extrémité, et qui sont conçus de façon à être fermement fixés au véhicule,
- les rails de coulissement (2) étant conçus de façon à être étroitement associés aux rails de support (3), et à être mobiles par rapport à ceux-ci, de façon à rendre ainsi possible au dispositif de silencieux d'être extrait,
**caractérisé en ce que** le dispositif de silencieux (1) est fermement fixé aux rails de coulissement (2) par l'intermédiaire d'au moins deux unités d'amortissement (4), qui sont conçues de façon à être adaptées dans lesdits éléments d'adaptation (13), et **en ce que** chaque rail de coulissement (2) comporte au moins deux rouleaux (22) qui sont situés à sa première extrémité et qui butent contre les côtés longitudinaux du rail de support (3) lorsque le rail de coulissement (2) est mobile par rapport au rail de support (3), et qui sont reçus dans des cavités (33) dans le rail de support (3) lorsque le dispositif de silencieux (1) est adapté dans le véhicule, ou, autrement dit, lorsque le rail de coulissement (2) est complètement inséré dans le rail de support (3).

2. Système de suspension selon la revendication 1, **caractérisé en ce que** les rails de support (3) sont conçus de façon à être parallèles et horizontaux, et à être étroitement associés à un râtelier de support (11, 12), et **en ce que** le râtelier de support est conçu de façon à être étroitement associé au châssis et/ou à la caisse du véhicule.

3. Système de suspension selon l'une quelconque des revendications précédentes, **caractérisé par** deux ouvertures d'adaptation (25), qui sont étroitement associées au rail de coulissement (2), et dans lesquelles les unités d'amortissement (4) sont conçues pour être adaptées.

4. Système de suspension selon la revendication 3, **caractérisé en ce que** les ouvertures d'adaptation (25) sont respectivement situées dans des premier et deuxième supports d'adaptation (23, 24) à proximité du rail de coulissement (2).

5. Système de suspension selon la revendication 2, **caractérisé en ce que** le râtelier de support (11, 12) comprend des éléments sensiblement à angle droit par rapport aux rails (2, 3).

6. Système de suspension selon la revendication 1, **caractérisé en ce que** le rail de coulissement (2) peut être extrait d'entre 500 et 600 mm par rapport au rail de support (3).

7. Système de suspension selon l'une quelconque des revendications précédentes, **caractérisé en ce que** le mouvement du rail de coulissement (2) par rapport au rail de support (3) lorsque le dispositif de silencieux (1) est poussé vers l'intérieur est limité par une barre de verrouillage (31) qui est située à la première extrémité du rail de support (3), et qui vient alors en butée contre la première extrémité du rail de coulissement (2).

8. Système de suspension selon l'une quelconque des revendications précédentes, **caractérisé en ce que** le mouvement du rail de coulissement (2) par rapport au rail de support (3) lorsque le dispositif de silencieux (1) est extrait est limité par un dispositif de verrouillage (32) qui est voisin des côtés longitudinaux du rail de support (3), et qui vient alors en butée contre les rouleaux (22) du rail de coulissement (2).

9. Système de suspension selon la revendication 1, **caractérisé en ce que** les unités d'amortissement (4) comprennent chacune un tampon d'amortissement cylindrique supérieur et inférieur (41, 42) et un élément intermédiaire (44) relié à ceux-ci par une tige (43) qui est conçue de façon à être alignée avec une ligne centrale longitudinale (C).

10. Système de suspension selon les revendications 3 et 9, **caractérisé en ce que** la tige (43) de chaque unité d'amortissement (4) est conçue de façon à être adaptée dans lesdites ouvertures d'adaptation (25) sur les rails de coulissement (2) et dans des ouvertures (15) dans les éléments d'adaptation (13).

11. Système de suspension selon l'une ou l'autre des revendications 1 et 10, **caractérisé en ce que** lesdits éléments d'adaptation (13) comportent des brides faisant saillie à angle droit.

12. Véhicule, **caractérisé en ce qu'**il est muni d'un système de suspension selon l'une quelconque des revendications 1 à 11.
